# DEMANDE DE BREVET EUROPEEN

(11) **EP 0 975 045 A1**
(43) Date de publication de la demande: **26.01.2000**
(21) Numéro de dépôt: 99401713.5
(22) Date de dépôt: 08.07.1999
(51) Int. Cl.: H01Q 1/12

(54) **Vitrage à antenne pour véhicules automobiles**

(30) Priorité: 17.07.1998 DE 19832228
(71) Demandeur: SAINT-GOBAIN VITRAGE, 92400 Courbevoie (FR)
(72) Inventeur: Sauer, Gerd, 52224 Stolberg (DE)
(74) Mandataire: Muller, René

(57) **Abrégé**

Un vitrage à antenne pour véhicules automobiles est pourvu d'une couche conductrice de l'électricité (5) qui fait fonction de conducteur d'antenne. Afin d'éviter le couplage capacitif de la couche avec la carrosserie du véhicule, la couche (5) se termine à une distance de quelques centimètres avant le bord du vitrage. Le couplage de la couche (5) au câble de connexion d'antenne menant à l'appareil récepteur est réalisé de façon capacitive par le biais d'une électrode de couplage (9). L'électrode de couplage comprend des fils minces (10) reliés entre eux par galvanisation, qui sont agencés à une grande distance l'un de l'autre qui est grande par rapport à leur diamètre.

## Description

La présente invention concerne un vitrage à antenne pour véhicules automobiles, comprenant un revêtement conducteur de l'électricité servant de conducteur d'antenne et un élément de connexion qui est couplé de manière capacitive au revêtement conducteur de l'électricité par le biais d'une électrode de couplage avec interposition d'une couche isolante.

Les vitrages à antenne comprenant des revêtements transparents susceptibles de conduire l'électricité sont connus dans différentes formes de réalisation. Les revêtements sont généralement des revêtements réfléchissant le rayonnement infrarouge, qui possèdent avant tout une fonction de protection solaire. Ces revêtements réfléchissant le rayonnement infrarouge présentent pour la plupart une ou plusieurs couches fonctionnelles en argent et possèdent une résistance de surface d'environ 4 Ω/□ pour une transmission lumineuse de 75%. Grâce à leur propriété de conduction électrique, ces couches peuvent être utilisées comme antenne de réception pour la réception radio.

Les couches conductrices, qui sont essentiellement constituées de couches multiples appliquées par pulvérisation, se trouvent habituellement à l'intérieur d'un vitrage en verre feuilleté. Elles peuvent être disposées directement sur la surface de l'une des deux vitres ou sur la surface d'une fine feuille de support transparente, qui est reliée aux deux vitres par le biais de deux feuilles adhésives thermoplastiques.

Le document DE 19 735 395 A1 décrit comment coupler de manière capacitive une couche conductrice servant d'antenne au conducteur de connexion par lequel le signal d'antenne est transmis au récepteur radio. Le couplage capacitif est alors effectué de telle sorte qu'une électrode réalisée en forme de bande soit pressée sur la face du vitrage en verre feuilleté tournée vers l'habitacle, tandis que la couche conductrice est disposée à l'intérieur du vitrage en verre feuilleté. La longueur de l'électrode en forme de bande doit être supérieure à 5 cm et sa largeur doit être comprise entre 5 et 10 mm. L'électrode de couplage doit être installée à une distance aussi grande que possible du cadre de fenêtre conducteur, c'est-à-dire à l'intérieur de la surface visible du vitrage. Si l'on veut éviter l'effet gênant en termes optiques qui en résulte, le cadre décoratif en peinture à cuire opaque généralement apposé sur le bord du vitrage doit être réalisé en une largeur correspondante. La surface de la fenêtre est ainsi à nouveau réduite et le cadre décoratif élargi implique également une diminution de l'image apparente du vitrage du véhicule.

L'invention a pour but, en conservant le couplage capacitif avantageux en soi entre le conducteur de connexion d'antenne et la couche conductrice, de réaliser l'électrode de couplage de telle sorte qu'elle puisse être installée dans la zone du vitrage non recouverte par le cadre décoratif, c'est-à-dire dans la zone destinée à la vue, par transparence, sans qu'elle ne produise un effet gênant sur le plan optique.

Ce but est atteint suivant l'invention par le fait que l'électrode de couplage est constituée de fils minces reliés entre eux par galvanisation, qui sont agencés à une distance les uns des autres qui est grande par rapport à leur diamètre.

Lorsque des fils de, par exemple, 10 à 100 µm de diamètre sont agencés à l'intérieur d'un vitrage en verre feuilleté ou sur sa surface, ils ne peuvent absolument pas être décelés en tant que tels dans des conditions normales, à moins qu'ils ne soient disposés à de très faibles distances les uns des autres. Lorsque, par contre, leur écartement mutuel s'élève au moins au décuple environ de leur diamètre, ils ne peuvent être vus en tant que tels que si l'on approche les yeux très près du vitrage. L'invention tire profit de ce phénomène. Il s'est avéré étonnamment que, par rapport à une électrode de couplage plane, fabriquée par exemple à partir d'une bande de feuille métallique, la capacité de couplage atteinte dans la forme de réalisation suivant l'invention suffit amplement pour la transmission du signal d'antenne. Si l'on compare, par exemple, la capacité de couplage d'une électrode de couplage composée de trois fils de tungstène d'une longueur de 5 cm et d'un diamètre de 20 µm chacun, agencés parallèlement à une distance de 3 mm l'un de l'autre, d'une part, et une électrode de cuivre de même longueur et d'une largeur de 6 mm, les mesures font apparaître que la capacité de couplage n'est inférieure que de 40%. En augmentant le nombre de fils et leur longueur, on peut, si nécessaire, augmenter la capacité de couplage, jusqu'à la même valeur que celle des électrodes de couplage de pleine surface connues.

Des aspects de réalisation et des développements avantageux de l'invention ressortent des revendications dépendantes et de la description ci-après d'exemples de réalisation donnée avec référence aux dessins, dans lesquels :
la Fig. 1 est une vue fragmentaire d'un pare-brise suivant l'invention dans la zone de connexion de l'antenne ;
la Fig. 2 est une vue en coupe prise suivant la ligne II-II de la Fig. 1 dans la zone du bord supérieur du pare-brise ;
la Fig. 3 est une vue en coupe dans la zone du bord supérieur d'une autre forme de réalisation d'un pare-brise suivant l'invention, et
la Fig. 4 montre un pare-brise comprenant plusieurs endroits de couplage pour une utilisation en tant qu'antenne diversité.

En principe, l'invention peut non seulement trouver une application dans les vitrages en verre feuilleté, mais également dans les vitrages monolithiques pour véhicules dans lesquels la couche conductrice est déposée sur la surface tournée vers l'habitacle et est composée en particulier d'oxyde d'étain dopé au fluor appliqué par pyrolyse. Dans ce cas, les fils formant l'électrode de couplage sont noyés entre des feuilles diélectriques en un polymère transparent. La feuille tournée vers la couche conductrice est constituée de préférence d'un matériau adhésif ou est pourvue d'une couche adhésive à l'aide de laquelle l'électrode de couplage adhère au vitrage.

L'invention est toutefois principalement destinée aux vitrages en verre feuilleté. En conséquence, elle est décrite ici sur la base d'exemples de réalisation prévus pour des vitrages en verre feuilleté. Alors que les pare-brise pour véhicules routiers sont constitués presque exclusivement de verre feuilleté, le verre feuilleté est également utilisé dans une mesure croissante pour les lunettes arrière, si bien que les vitrages à antenne suivant l'invention ne sont en principe pas limités aux pare-brise, mais peuvent naturellement être utilisés pour tous les vitrages de véhicules.

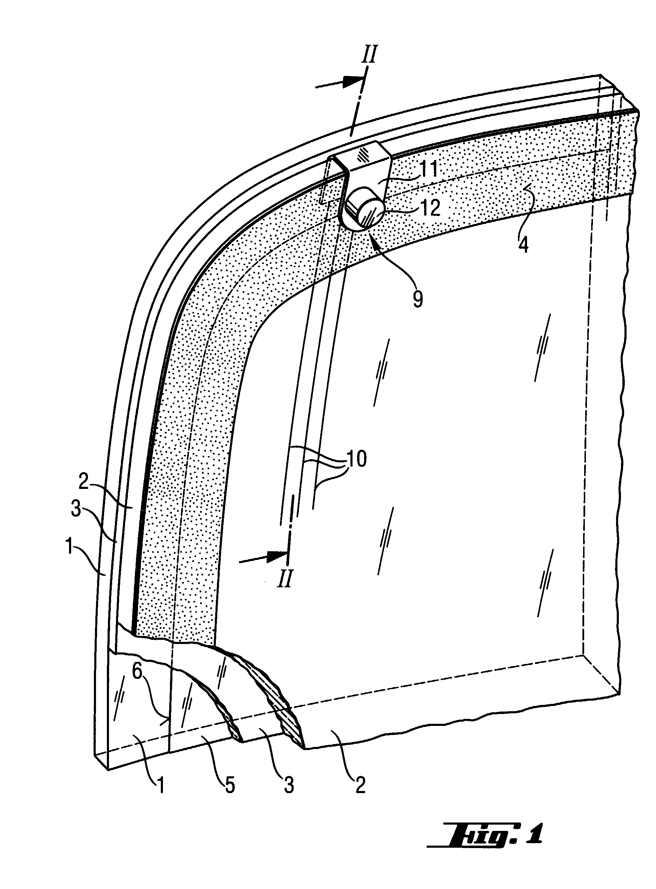

Comme le fait apparaître la Fig. 1, un pare-brise en verre feuilleté se compose, dans sa forme de réalisation la plus simple, de deux vitres 1 et 2, qui sont reliées entre elles par une couche intermédiaire thermoplastique 3, en général en polybutyral de vinyle.

La vitre intérieure 2 est pourvue sur sa face tournée vers l'habitacle de conduite d'un cadre décoratif 4 en une peinture à cuire opaque. La vitre extérieure 1 est pourvue d'une couche 5 conductrice de l'électricité du côté adjacent à la couche intermédiaire thermoplastique 3. Cette couche 5 est de préférence une couche multiple, qui est essentiellement composée d'oxyde de métal, de métal et d'oxyde de métal, qui sont déposés sur la surface de la vitre par le procédé de pulvérisation cathodique assistée par champ magnétique. La zone du bord de la vitre est exempte de la couche conductrice sur une largeur B d'environ 2 à 4 cm, afin de prévenir le couplage capacitif de la couche avec la plage de fixation de la carrosserie du véhicule, qui appauvrirait sensiblement l'efficacité de la couche conductrice 5 comme antenne. Le cadre décoratif 4 dépasse la limite 6 de la couche 5, de sorte que la fin de la couche n'est pas perçue comme telle à l'oeil nu. Pour que le bord de la vitre 1 reste exempt de couche 5, le bord de la vitre peut être masqué avant le dépôt de la couche ou la couche peut être enlevée ultérieurement dans la zone du bord.

Aux fins du couplage capacitif de la couche 5 au récepteur radio, l'électrode de couplage 9 est fixée sur le bord de la vitre 2 avant la fabrication du vitrage en verre feuilleté, c'est-à-dire avant l'assemblage des couches formant le vitrage en verre feuilleté. L'électrode de couplage proprement dite est constituée de plusieurs fils métalliques minces 10, par exemple de trois fils de tungstène d'un diamètre de 20 µm, qui s'étendent à une distance d'environ 2 à 5 mm parallèlement les uns aux autres. Les fils de tungstène sont de préférence noircis en surface et ne sont pratiquement pas visibles à l'oeil nu. Les fils 10 sont reliés de façon conductrice de l'électricité à une extrémité à une bande de feuille métallique 11. La bande de feuille métallique 11 est disposée autour de la surface du périmètre de la vitre 2 et est collée à la surface du verre. Elle est pourvue à son extrémité d'une barrette de connexion ou d'un élément de contact 12 qui sert à la connexion au câble d'antenne reliant le récepteur radio. Les fils métalliques 10 et la bande de feuille métallique 11 sont collés à la vitre 2 au moyen d'une couche adhésive appropriée.

L'électrode de couplage 9 constituée des fils 10 et de la bande de feuille métallique 11 qui est reliée à ceux-ci est réalisée par exemple sous la forme d'un composant préfabriqué suivant le procédé décrit dans le document DE 4 332 320 C1, dans lequel les fils sont déposés et fixés sur une feuille de support intermédiaire dans l'agencement géométrique souhaité. Pour fixer les fils sur la feuille de support intermédiaire, on peut par exemple utiliser une couche adhésive thermoplastique, en particulier du même matériau thermoplastique que la feuille thermoplastique 3 du vitrage en verre feuilleté.

L'électrode de couplage est appliquée et fixée sur la vitre 2 au moyen de la feuille de support intermédiaire. Après l'enlèvement de la feuille de support intermédiaire, les vitres 1 et 2 et la couche thermoplastique intermédiaire 3 sont traitées d'une manière courante en utilisant la chaleur et la pression pour former le vitrage en verre feuilleté.

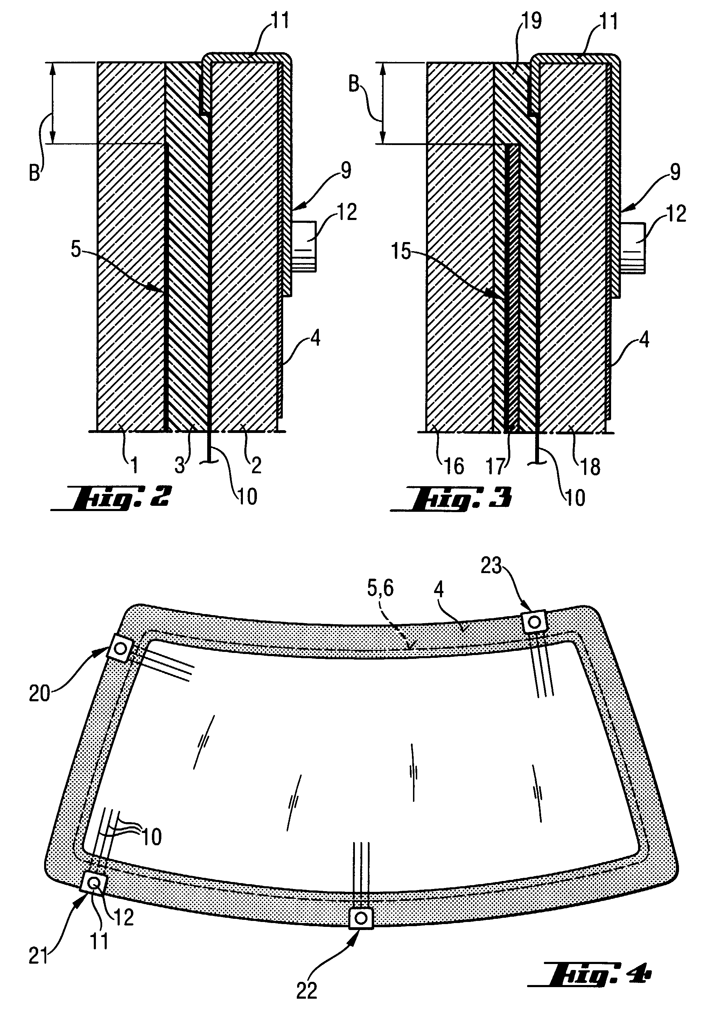

La Fig. 3 montre une autre forme de réalisation d'un vitrage à antenne suivant l'invention. Dans ce cas, la couche conductrice de l'électricité 15 n'est pas située sur la vitre extérieure 16, mais sur une mince feuille transparente 17, par exemple en téréphtalate de polyéthylène (PET) . La feuille revêtue 17 est dans l'ensemble plus petite que les vitres 16, 18, de sorte que la zone du bord du vitrage en verre feuilleté est à nouveau dépourvue de la couche afin d'éviter un couplage capacitif marginal avec la carrosserie métallique du véhicule. La feuille revêtue 17 est insérée entre deux feuilles de polybutyral de vinyle qui se lient à la feuille revêtue durant le processus d'assemblage du verre feuilleté et se fondent l'une avec l'autre dans la zone du bord en une couche intermédiaire homogène 19.

Le couplage capacitif de la couche conductrice 15 au câble d'antenne menant au récepteur radio s'effectue par le biais de l'électrode de couplage constituée des fils 10 et de la bande de feuille métallique 11, de la même manière que celle décrite à propos des Fig. 1 et 2, de sorte qu'il y est fait référence à cet égard.

La Fig. 4 montre une vue frontale d'un pare-brise à antenne approprié pour être utilisé comme antenne diversité comprenant au total quatre électrodes de couplage 20 à 23. Il est connu que, dans les antennes à couches, la hauteur du signal d'antenne et sa caractéristique de réception radio dépendent de la position du point de couplage et de l'orientation respective du vitrage à antenne par rapport à l'émetteur, de sorte que les performances de l'antenne peuvent être optimisées par l'installation de plusieurs électrodes de couplage à différents points de la couche et par la sélection du point de couplage le plus favorable à chaque fois, à l'aide d'un processeur diversité. Dans l'exemple illustré, le pare-brise est pourvu de quatre électrodes de couplage au total, à savoir une électrode de couplage 20 dans la zone de coin supérieure gauche, une électrode de couplage 21 dans la zone de coin inférieure gauche, une autre électrode de couplage 22 au milieu de la zone de bord inférieure et une électrode de couplage 23 dans la zone de coin supérieure droite.

La longueur des fils minces formant l'électrode de couplage détermine la capacité du condensateur de couplage et peut être choisie dans la perspective d'une perte aussi faible que possible; elle doit être au minimum d'environ 5 cm, et être comprise de préférence entre 10 et 30 cm. De même, le nombre de fils influence la capacité de couplage ; la puissance du signal d'antenne utilisable peut ainsi également être accrue en augmentant le nombre de fils.

Les exemples de réalisation décrits font référence à des vitrages en verre feuilleté dans lesquels la couche conductrice de l'électricité se trouve sur une face intérieure du vitrage en verre feuilleté. Comme cela a toutefois déjà été mentionné, il est bien entendu possible également de réaliser suivant l'invention un couplage capacitif du câble d'antenne avec une couche conductrice de l'électricité sur une surface extérieure d'un vitrage en verre feuilleté ou sur un vitrage monolithique, par exemple une couche d'oxyde étain-indium appliquée par pyrolyse sur la surface du pare-brise tournée vers l'habitacle. Dans ce cas, il faudra choisir une forme de réalisation des électrodes de couplage dans laquelle les fils de couplage sont enrobés d'une couche isolante ou noyés entre des couches isolantes.

## Revendications

1. Vitrage à antenne pour véhicules automobiles comprenant un revêtement conducteur de l'électricité servant de conducteur d'antenne et un élément de connexion qui est couplé de manière capacitive au revêtement conducteur de l'électricité par le biais d'une électrode de couplage avec l'interposition d'une couche isolante, caractérisé en ce que l'électrode de couplage (9) est constituée de fils minces (10) reliés entre eux par galvanisation, qui sont agencés à une distance les uns des autres qui est grande par rapport à leur diamètre.

2. Vitrage à antenne suivant la revendication 1, caractérisé en ce que l'électrode de couplage (9) est constituée de fils d'une épaisseur de 10 à 100 µm.

3. Vitrage à antenne suivant la revendication 1 ou 2, caractérisé en ce que l'électrode de couplage (9) comprend deux à dix fils qui sont agencés à une distance réciproque de 1 à 5 mm parallèlement les uns aux autres et sont reliés entre eux à leur extrémité située du côté de la connexion.

4. Vitrage à antenne suivant l'une quelconque des revendications 1 à 3, caractérisé en ce que les fils (10) de l'électrode de couplage (9) présentent une longueur d'au moins 5 cm.

5. Vitrage à antenne suivant la revendication 4, caractérisé en ce que les fils (10) présentent une longueur comprise entre 10 et 30 cm.

6. Vitrage à antenne suivant l'une quelconque des revendications 1 à 5, caractérisé en ce que l'électrode de couplage (9) est un composant préfabriqué comprenant les fils (10), une bande de feuille métallique (11) reliée aux fils (10) par galvanisation et un élément de contact (11).

7. Vitrage à antenne suivant la revendication 6, caractérisé en ce que l'électrode de couplage (9) est pourvue d'une couche adhésive en vue de la fixation par adhésion sur les vitres (2, 18).

8. Vitrage à antenne suivant la revendication 7, caractérisé en ce que le vitrage à antenne est en verre feuilleté et en ce que la couche adhésive dans la zone des fils (10) est composée du même polymère thermoplastique que la couche thermoplastique intermédiaire (3) du vitrage en verre feuilleté.

9. Vitrage à antenne suivant l'une quelconque des revendications 1 à 8, caractérisé en ce qu'elle est pourvue de plusieurs électrodes de couplage (20, 21, 22, 23) en vue de la connexion à un processeur diversité.
